Europäisches Patentamt

European Patent Office

Office européen des brevets

(19)

(11) Publication number: **0 273 858 B1**

# EUROPEAN PATENT SPECIFICATION

(12)

(45) Date of publication of patent specification: **12.06.91**   (51) Int. Cl.⁵: **B65D 41/34**, B29C 69/00

(21) Application number: **87810632.7**

(22) Date of filing: **04.11.87**

(54) Tamper-evident closure, method and apparatus for its forming.

(30) Priority: **14.11.86 GB 8627251**

(43) Date of publication of application:
**06.07.88 Bulletin   88/27**

(45) Publication of the grant of the patent:
**12.06.91 Bulletin   91/24**

(84) Designated Contracting States:
**AT BE CH DE ES FR GB GR IT LI LU NL SE**

(56) References cited:
**DE-A- 2 518 117**
**DE-B- 1 139 403**
**GB-A- 2 146 007**

**MODERN PLASTICS, vol. 47, no. 7, July 1970,**
**pages 90-94, McGraw-Hill, New York, US; R.**
**PYE: "Assembling parts in the mold"**

(73) Proprietor: **ALFATECHNIC AG**
**In Lampitzäckern 51**
**CH-8305 Dietlikon(CH)**

(72) Inventor: **Dubach, Werner F.**
**Hubrain 4**
**CH-8124 Maur(CH)**
Inventor: **Sinnot, Kenneth Martin**
**Cromwell Road St. Noets**
**Huntingdon Cambridgeshire PE 19 1QL(GB)**

(74) Representative: **Feldmann, Clarence Paul et al**
**c/o Patentanwaltsbüro FELDMANN AG Post-**
**fach Kanalstrasse 17**
**CH-8152 Glattbrugg(CH)**

## Description

The present invention relates to a plastic tamper-evident closure, i.e. a closure which indicates if said closure has previously been removed and replaced, after initial filling of the container to which the closure has been applied.

Known tamper-evident plastic closures frequently have a tamper-evident band which is joined to the main part of the closure by frangible bridges which become ruptured as the closure is unscrewed. As a result, if the closure is re-applied, the fact that the tamper-evidence band has already been separated from the skirt of the closure, is a clear indication that the closure has at least once been removed from the container after packing. The arrangement is normally such that it is intended that the closure can be applied to the container without damage to the frangible bridges which are then ruptured upon first removal of the closure.

However, tamper-evident features comprising frangible bridges have two principal shortcomings. Firstly, the bridges may not all be broken as the closure ist unscrewed from the container which then makes it difficult to remove the closure from the container. Secondly, some of the bridges may break when the closure is applied to the container.

From the GB-A-2' 146'007 a tamper-evident plastic closure is known having a plastic pilfer-proof band, which is not integrally connected to the closure. The pilfer-band and the closure are produced separatly and then joined together. Such a pilfer-proof band might be reassembled after the container has been opened. Moreover its production is complicated because it requires special tools for joining the separately made parts.

It is an object of the present invention to provide such a tamper-proof closure with a tamper-evident band which is not integrally connected to the closure and which cannot be reassembled once the container has been opened.

In a particularly preferred form of the present invention the arrangement is such that the closure and the tamper-evident band are moulded simultaneously and become engaged together during the action of bumping or stripping the closure and tamper-evident band from the mould.

In order that the present invention may be more readily unterstood the following description is given, merely by way of example, with reference to the accompanying drawings in which:-
Figure 1 is a side elevational view of a container prior
to application of a closure device thereto;
Figure 2 is a view of the container of Figure 1 having a
tamper-evident closure device thereon;

Figure 3 is a view corresponding to Figure 1 but showing the container, with the tamper-evident band of the closure device still attached thereto;

FIGURE 4 is given, by way of comparison, and illustrates the container having had the tamper-evident closure device removed and the closure thereof re-applied without the tamper-evident band re-applied thereto;

FIGURE 5A is a diametral sectional view of the container neck showing the closure and tamper-evident band being applied thereto;

FIGURE 5B is a view similar to Figure 5 showing the tamper-evident closure device at the end of the operation of its application to the container neck;

FIGURE 6A, 68 and 6C are diametral sectional views which illustrate different stages during the operation of deforming a retaining bead of the tamper-evident band.

FIGURE 7 shows the configuration after separation of the integrally moulded closure and tamper-evident band;

FIGURE 8 is a view showing the tamper-evident band having been inserted in the closure, leaving the closure device complete ready for application to a container;

FIGURE 9 is a diametral sectional view of an alternative embodiment, in this case showing the mould parts for moulding the closure and the tamper-evident band;

FIGURE 10 shows the apparatus of Figure 9 at the beginning of the operation of bumping off the tamper-evident band from its mould core;

FIGURE 11 is a diametral sectional view showing the configuration at completion of the operations of inserting the tamper-evident band in the spacing between the two skirt portions of the closure; and

FIGURE 12 is a diametral section of an alternative embodiment of the second embodiment.

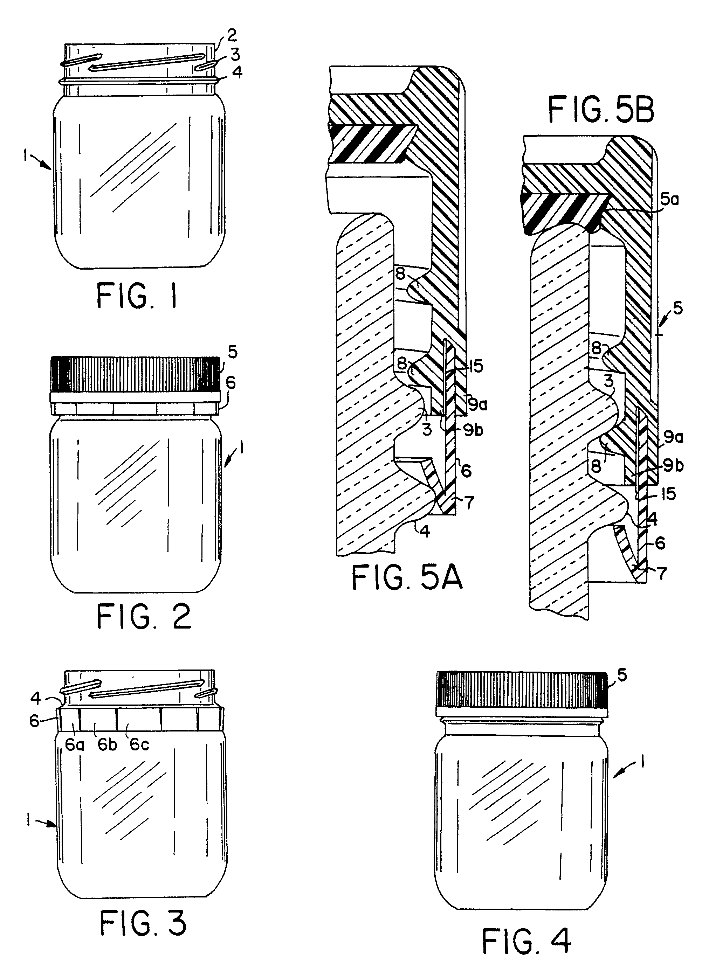

The side elevational views of Figures 1 to 4 illustrate the principles of the present invention in terms of the operation of the closure device.

The container 1 of Figure 1 has a neck 2 threaded at 3 with a multi-start thread, and complete with a transfer ring 4 projecting outwardly from the container neck finish and serving to facilitate handling of the container at the end of its moulding operation while the container is still in a hot state.

Figure 2 shows the same container 1 having its neck closed by a tamper-evident closure device comprising a plastic closure 5 having a plastic tamper-evident band 6 which is partially inserted into the closure skirt.

Any suitable plastic material may be used for moulding the closure 5 and for the tamper-evident band 6, such as polypropylene, ethylene-propylene copolymer, polyethylene, polystyrene, polyethylene terephthalate, and may be with or without fillers, and may include any suitable pigments, dyes, anti-static agents, anti-oxidants, and lubricants.

By way of example, Figure 3 shows the tamper-evident band 6 after separation from the closure 5, and this drawing shows the plurality of segments 6a, 6b, 6c...etc. of the tamper-evident band joined at their lower portions but splayed apart at their upper portions by the container neck finish transfer ring to provide a generally frusto-conical form to the tamper-evidence band.

It will of course be appreciated that in the Figure 2 situation, where the tamper-evident band 6 is inserted in the skirt of the closure 5, the various segments 6a, 6b, 6c...etc. form a substantially cylindrical outer surface in that the V-shaped slots between successive segments 6a and 6b, 6b and 6c...etc. are of uniform width whereas in Figure 3 they are shown as increasing in width nearer the free end of the container neck.

Quite simply, Figure 4 shows the container 1 after re-application of the closure 5 without the tamper-evident feature.

As shown in Figure 5, the tamper-evident band 6 has an upwardly extending bead 7 in the form of a flexible skirt which, as the tamper-evident closure device is moved downwardly during closing of the container, engages under the transfer ring 4.

As shown in Figures 5A and 5B, the closure has a sealing gasket 5a of a plastic material which is softer than the material used for the closure proper.

In the conventional way, the closure skirt is provided with internal threads 8 to co-operate with the external threads 3 of the container neck,

In the illustrations of the preferred embodiment a four start thread is used. However, other arrangements such as a two start thread or a one start thread are possible.

When the closure is unscrewed from the container 1, the engagement of the bead 7 of the tamper-evident band 6 under the transfer ring 4 holds the tamper-evident band 6 down until eventually the closure 5 has been fully separated from the tamper-evident band 6 and tampering is indicated.

In the fully separated configuration of the tamper-evidence band, the upper ends of the segments splay apart from one another and the tamper-evident band 6 is able to drop down onto the barrel-shaped outer surface of the container 1, with the' result that it is very difficult, if not impossible, to be able to hold all of the segments 6a, 6b, 6c...etc. in precisely the required cylindrical configuration (at least without the provision of suitable tools) in order to reconnect the tamper-evidence band 6 and the closure 5. Effectively, therefore, it is not easy to re-assemble the closure 5 and the tamper-evident band 6 in the store and hence a workable tamper-evident feature has been disclosed.

It is not essential for the tamper-evidence band to be of segmented construction. As a workable alternative, the tamper-evident band 6 could be continuous around its circumference but dimensioned to make it difficult to re-engage the upwardly projecting end of the tamper-evident band with the closure skirt, in this case by inserting it in the deep annular groove 15 formed between outer and inner skirt portions 9a and 9b, respectively of the closure 5.

If desired, the tamper-evident band and the closure may be joined by breakable bridges in the "as moulded" state and these bridges may be separately broken when the tamper-evident band is inserted in the groove 15 between the two skirt portions 9a and 9b. However, such integral moulding is not essential as the tamper-evident band and the closure may be made entirely separately, but with the segments of the tamper-evident band joined together in order to facilitate assembly of the closure and the tamper-evident band.

If not integrally moulded, the tamper-evident band 6 and the closure 5 may, if desired, be made of different materials, in order to capitalize on the different properties of the material of the tamper-evident band on the one hand and of the closure on the other hand. Also, it is possible for the closure and the tamper-evident band to have different colours in order to discriminate more clearly between the closure, on the one hand, and the tamper-evidence band, on the other hand.

Although, as shown in Figures 5A and 5B, the closure is provided with a relatively softer sealing gasket, other sealing means may be provided, for example an inserted disc seal may be incorporated, or the entire closure may be made of the same material and relies on the provision of sealing means such as flexible flanges to seal against the container neck. Alternatively, there may be no seal of any, kind.

Figure 5A shows the situation when the closure device, i.e. the closure and tamper-evident band combination, has just been placed on the neck of the container, whereas Figure 5B shows the configuration at the termination of screwing down of the closure device on the container neck.

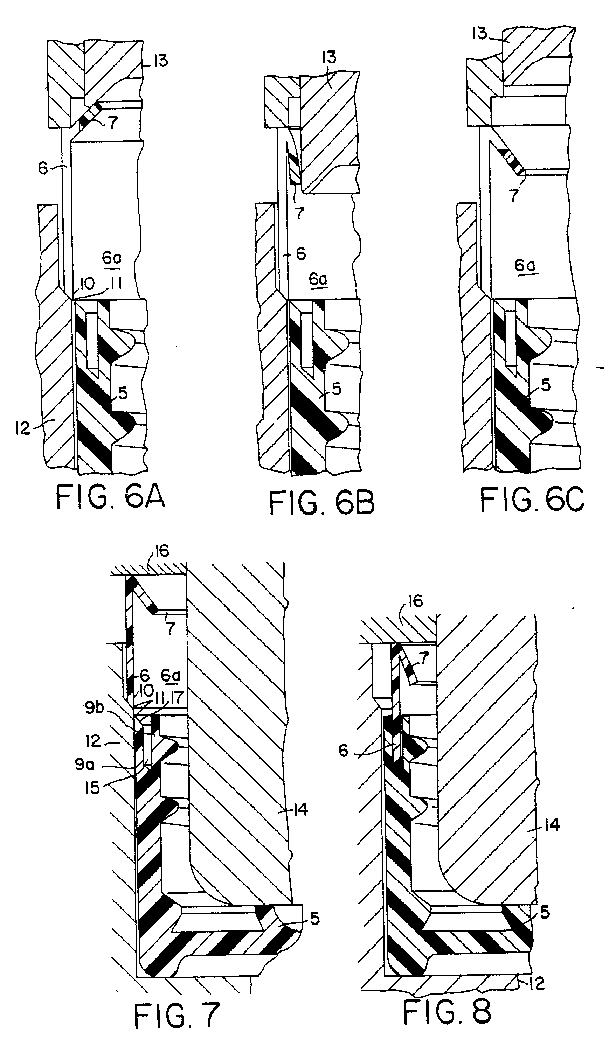

Figure 6A shows the combination of the tamper-evident band 6 and the closure 5 at the end of the moulding operation, with the combination of these two elements 5 and 6 placed in a holder ready for the subsequent combination of the two elements.

The section through the tamper-evident band 6 passes through one of the slots and shows the extensive depth of the slots between the segments such as 6a. At the end of the moulding operation, the tips 10 of the segments are connected to the closure 5 by way of frangible bridges 11 which facilitate handling of the closure 5 and its associated tamper-evident band 6.

With the tamper-evident band 6 supported on a tapering ramp surface of an outer support die 12, the bead 7 which has been moulded in an upwardly tapering configuration is engaged by a shaping tool 13 which turns the bead 7 inside out so that it points downwardly as shown in Figure 6C.

Figure 6B shows she deforming tool 13 down in its end position after having inverted the bead 7 and while the bead is held in a radially outward deformed configuration by the presence of the deforming tool 13.

Figure 6C shows that after retraction of the deforming tool 13 the bead has adopted once more a frusto-conical configuration, but now tapering downwardly, i.e. towards the closure 5.

As shown in Figure 7 the first step of the assembly operation involves a detaching tool 14 which presses the closure 5 downwardly while the tamper-evident band 6 is still supported by the outer tool 12, with the result that the frangible bridges 11 rupture, to separate the closure from the tamper-evident band 6.

In order then to combine the tamper-evident band 6 and the closure 5 in the desired manner (i.e. by pushing the tamper-evidence band segments 6a, 6b etc. into the deep annular groove 15 defined between the outer and inner skirt portions 9a and 9b referred to above, the upper end of the tamper-evident band 6 is then engaged by a pressing tool 16 which thrust the tamper-evident band 6 downwardly to cause the tips 10 of its segments to migrate inwardly and then to move down the ramp surface 17 of the outer skirt portion 9a to guide the segments into the annular groove 15. For this purpose, the segments 6a, 6b, 6c... etc. are separated from one another at their apex ends now that they are no longer connected to the outer skirt portion 9a. Previously it was the connection to the outer skirt portion 10a, by virtue of the bridges 11, which allowed the segments to be correctly positioned relative to one another at the end of the moulding operation.

The termination of this assembly operation is shown in Figure 8.

The configuration of the tamper-evident band 6 and closure 5 is such that the segments cannot readily be inserted into the groove 15 without the tooling shown in Figures 6 to 8.

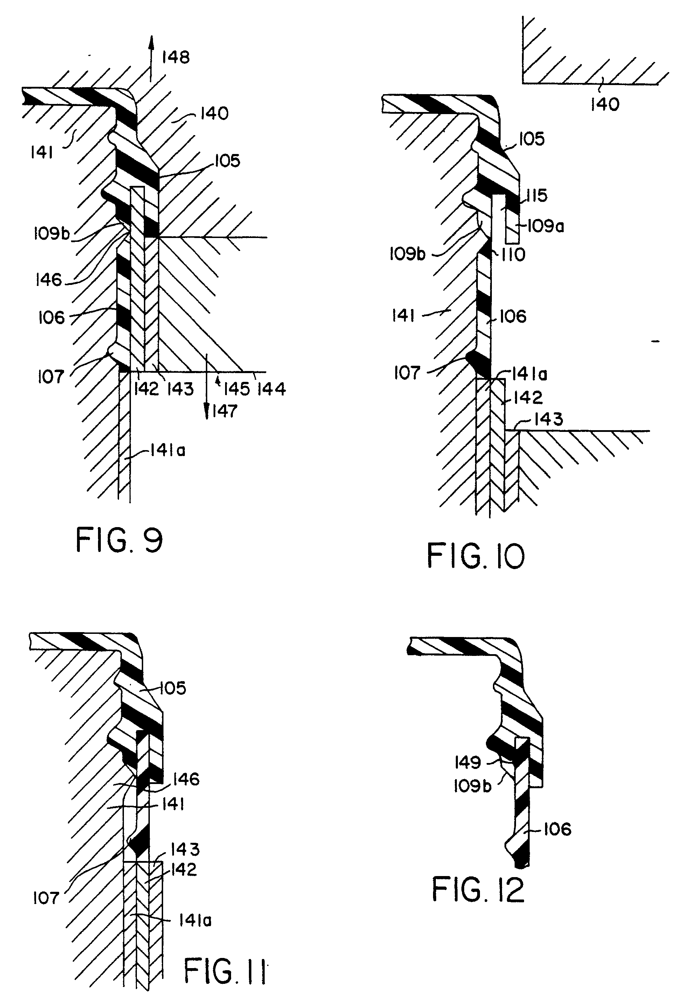

An alternative embodiment of the present invention is shown in Figures 9 to 11.

Figure 9 shows the mould configuration for an alternative embodiment of the tamper-evident closure device, i.e. the tamper-evident band and closure combination. In this case the tamper-evidence band 106 is moulded as a continuation of the inner skirt portion 109b of the closure and has the inwardly extending bead 107 formed as a "saw tooth" rib. Clearly such inwardly extending rib of the tamper-evident band may be of any other suitable design for locking under the transfer bead of the container neck finish.

The exterior of the closure is formed by a cavity-defining mould part 140 while the interior is defined by a moulding core 141 which also defines the interior of the tamper-evidence band 106.

The exterior of the tamper-evident band 106 is defined by a mould assembly 145 which comprises a radially inner sleeve 142, an intermediate sleeve 143 and an outer sleeve 144 which finally closes the mould. The three constituents 142, 143 and 144 are all able to move vertically independently of one another and are driven to do so in an appropriate sequence. The underside of the tamper-evident band 106 is defined by a sleeve 141a surrounding the mould core 141.

An outwardly projecting fin 146 of the mould core 141 defines two frusto-conical surfaces of the closure and tamper-evident band assembly, namely a first relatively shallow, (with respect to the horizontal) surface at the rim of the inner skirt portion 109b of the closure 105 and a steeper surface at the adjacent end of the tamper-evident band 106. The purpose of this steeper portion at the end of the tamper-evident band 106 is to facilitate insertion of the tamper-evident band segments into the recess 115 in a manner to be described later.

Figure 9 illustrates the closed configuration of the mould at termination of moulding of the closure 105 and the tamper-evident band 106 by injection of suitable plastic composition which is the same for the closure as for the tamper-evident band. If the closure 105 and the tamper-evident band 106 are not integral they may be formed of different materials in order to exploit different mechanical properties of the plastic material used, and in either case may be of the same or different colours.

During opening of the mould, relative movements of the parts occur as represented by arrows in Figure 9 where the tamper-evident band-defining assembly 145 descends relatively in the direction of the arrow 147 and equally the cavity-defining mould portion 140 rises relatively in the direction of the arrow 148. Thus the Figure 10 configuration is achieved.

As will be appreciated, after the cavity-defining component 140 has lifted, the closure 105 is held on the mould core 141 by the fact that the internal threads of the closure are still seated in the thread-defining recesses of the mould core 141. In order to strip the closure 105 from the mould core 141 it will be necessary to drive the closure 105 axially upwardly. In this second embodiment of the present invention the action of driving the closure upwardly, i.e. "bumping" or "stripping" it off the mould core 141, also achieves the desired result of inserting the various segments of the tamper-evident band 106 in the recess 115.

The radially inner sleeve 142 of the assembly 145 is, in the Figure 10 configuration, arranged with its top surface flush with that of the radially inner sleeve 141a which has just served to define the lower edge of the tamper-evident band 106.

At the start of the stripping operation, the mould core sleeve 141a and the radially inner sleeve 142 (of the assembly 145), respectively, rise together while the mould core sleeve 141a thrusts the tamper-evident band 106 upwardly the presence of the radially-inner sleeve 142 just radially outwardly thereof provides a support onto which the lower edge of the tamper-evident band 106 can move as its inner bead 107 springs out of the bead-defining recess of the mould core 141.

Other stripping movements of the mould parts are possible for example it is not necessary for the intermediate sleeve 143 initially to withdraw any further than the top of the inner sleeve 142.

Simultaneously with this upthrust on the tamper-evident band 106, its chamfered tip 110 (chamfered by the presence of the above-mentioned steeply inclined frusto-conical surface thereon) rides up over the lower edge of the radially inner skirt portion 109b of the closure 105 and enters the annular groove 115.

Even if the segments of the tamper-evident band 106 were not completely separated before the start of this stripping operation, they will be severed by the radially outward splaying of the segments.

In order to contain the segments during this splaying operation, the radially inner bottom edge of the outer skirt portion 109a extends downwardly beyond the radially outer bottom edge of the inner skirt portion 109b, in the configuration viewed in Figure 10.

At the end of the insertion travel of the tamper-evident band 106 into the annular groove 115, the Figure 11 configuration will have been achieved.

It then remains for the actual stripping of the closure 105 from the mould core 141 to be completed, by either further upward movement of the tamper-evident band 106 now driven by the radially inner sleeve 142 while the presence of the intermediate sleeve 143 immediately outwardly thereof provides a support surface onto which the tamper-evidence band lower edge can move in a radially outward direction as the bead 107 springs over the radially outwardly projecting rib 146 of the mould core 141. By the time this movement occurs, the closure 106 will have become virtually completely stripped from the moulding core 141 and its skirt will therefore itself have sprung outwardly.

It is important to note that whereas the apparatus illustrated in Figures 6A, 6B, 6C, 7 and 8 for reversal of the bead 7 and insertion of the tamper-evident band 6 in the annular groove 15 of the first embodiment comprise additional elements over and above the mould components, the same operation is achieved in Figures 9 to 11 using the mould components themselves. It is therefore the act of opening the mould for the second embodiment which achieves the desired insertion of the segments of the tamper-evident band 106 into the annular groove 115.

The skilled reader will of course appreciate that although the operation of inserting the tamper-evident band segments, into the annular groove 15 or 115 intended to accommodate them, appears to be a relatively straightforward operation when using the tooling illustrated in the drawings, this operation is far from easy in a store where someone may have without authority opened a pack and be anxious to re-close the pack in a way which does not reveal that the pack has been tampered with. The existence of the various segments which need to be very carefully held in a circular array in order to fit into the closure recess 15 or 115 cannot readily be achieved without the assistance of some additional equipment and consequently re-assembly of the closure is not easy and hence it is not easy to disguise the fact that it has been tampered with.

Figure 12 shows a variant of the second embodiment in which the radially inner skirt portion 109b of the closure includes a recess which receives an inwardly extending projection 149 of the tamper-evident band 106. The purpose of this is to provide the consumer with the distinct "click" feel as the tamper-evidence band starts to separate from the closure during unscrewing of the closure from the container.

The projections 149 may either be in the form of individual pips to enter individual dimples of the closure skirt portion 109b, or they may comprise discontinuous or continuous beads to engage in suitably arranged grooves in the skirt portion of the closure.

If desired, several sets of the projections 149 and corresponding recesses may be provided at various axial stations along the radially inner surface of the tamper-evident band 106 and the radially outer surface of the inner skirt portion 109b respectively, in order to provide a succession of such clicks as each of the projections 149 snaps into and out of the various axially spaced recesses.

If desired, the design of the closure and/or of the tamper-evident band may be further modified in order to make it even more difficult for a vandal to be able to reassemble the tamper-evident band and the closure after in-store tampering.

It will be appreciated that Figures 9 to 12 are intended to illustrate the principle of inserting the tamper-evident band in the recess of the closure while stripping the closure from its mould core. Other mould arrangements may, of course, be used in order to implement this principle.

As mentioned above with the embodiment of Figures 1 to 8 the tamper-evident band may be moulded entirely separately from the closure, or may be moulded integrally therewith but joined by breakable bridges as illustrated in the two embodiments described above. The moulding of the two components of Figures 1 to 8 in an integral relationship simplifies subsequent handling of the components before insertion of the tamper-evidence band into the groove of the closure and is therefore preferred.

The closure device in accordance with the invention is suitable for any type of container made from glass, plastic or metal, such as jars and bottles for food and beverages.

## Claims

1. A plastic tamper-evident closure device comprising a container closure (5;105) and an annular tamper-evident member (6;106) which is mechanically engaged within the internally threaded skirt of the closure but not integrally connected to it so that removal of said closure from the container results in disengagement of the tamper-evident band from the closure as a result of an axial force developed during removal of the closure, characterised in that the skirt of the closure (5;105) has an annular groove (15;115) and that the tamper-evident band (6;106) is elastically deformable and has in its non assembled state a diameter which is different from the diameter being defined by said annular groove such that it is insertable under pressure into said annular groove as the closure device is assembled, and in that it prevents the separated parts from being reassembled, once the closure is unscrewed from the container.

2. A closure device according to claim 1, characterised in that the tamper-evident band (6) comprises a plurality of segments (6a, 6b, 6c) which are separated from one another by slits extending at least partially through the tamper-evident band in an axial direction thereof.

3. A closure device as claimed in claim 1 or 2 characterised in that the tamper-evident band (6) has a radially inwardly projecting, upwardly extending bead portion (7).

4. A closure device as claimed in claim 3, characterised in that the bead portion (7) has a frustoconical surface which is convergent in a direction towards the closure (5), when of the closure and the tamper-evident band (6) are assembled.

5. A closure device as claimed in claim 1 or 2 characterised in that the tamper-evident band (106) has an inwardly extending bead (107) having a saw-tooth profile in cross section.

6. A closure device as claimed in the previous claims characterised in that the tamper evident band (6;106) chamfered end portion (10,110) cooperating with a correspondingly chamfered end portion of said closure's skirt to support the insertion of said tamper evident band into said annular groove.

7. A method of forming a closure according to any one of the claims 1 to 4 characterised in that the closure (5) and the tamper-evident band (6) are formed in a common mould (12,13) in which the chamfered outer circumference end portion of the lower end of the closure-skirt (5) is connected by frangible bridges (11) to the chamfered end portion of said tamper-evident band (6).

8. A method of forming a closure according to claim 1,2 and 5, characterised in that the closure (105) and the tamper-evident band (106) are formed in a common mould (140-145) in which the inner circumference of the lower end of the closure-skirt (105) is connected by frangible bridges (146) to the tamper-evident band (106).

9. A method of forming a plastic tamper-evident closure device in accordance with claims 7 or 8 characterised by commonly moudling a closure and a separate tamper-evident band therefor, providing a diameter for said tamper-evident band which is different from the diameter defined by the annular groove between the radially inner and outer skirt portions of the internally threaded skirt of the closure and inserting by pressure one end of the tamper-evident band into said annular groove of the closure.

10. A method according to claim 9 characterised in that the tamper-evident band and said closure are moulded on a common mould core and wherin the insertion of the tamper-evident band into said annular groove is effected during stripping of said tamper-evident band and said closure from said common mould core.

11. Apparatus for moulding a plastic tamper-evident closure in accordance with the method of claims 7-10, characterised in that it comprises a common mould core (141) which defines the interior configuration of the internally threaded closer and of the tamper-evident band therefor; means (142) for providing the annular groove between the radially inner and outer portions of the skirt of said closure; means for providing a tapered surface to said tamper-evidence band; and means (141a) for fitting said tamper-evident band into said annular groove after withdrawal of the groove-providing element from said moulding apparatus, when said tamper-evident band and said closure are ejected from the common mould core.

**Revendications**

1. Dispositif de fermeture inviolable en matière plastique comprenant une fermeture de récipient (5 ; 105) et un organe d'inviolabilité annulaire (6 ; 106) qui est mécaniquement en prise à l'intérieur de la jupe filetée intérieurement (8) de la fermeture, mais qui ne lui est pas relié d'un seul tenant, de sorte que l'enlèvement de ladite fermeture du récipient se traduit par le fait que la bande d'inviolabilité Se dégage de la fermeture à la suite d'une force axiale développée pendant l'enlèvement de la fermeture, caractérisé par le fait que la jupe de la fermeture (5 ; 105) présente une rainure annulaire (15 ; 115), par le fait que la bande d'inviolabilité (6 ; 106) est élastiquement déformable et que, dans son état non assemblé, elle présente un diamètre qui diffère du diamètre défini par ladite rainure annulaire, de telle sorte qu'elle puisse être insérée sous pression dans ladite rainure annulaire lorsque l'on assemble le dispositif de fermeture, et par le fait qu'elle empêche les parties séparées d'être assemblées à nouveau une fois que la fermeture est dévissée du récipient.

2. Dispositif de fermeture selon la revendication 1, caractérisé par le fait que la bande d'inviolabilité (6) comprend une pluralité de segments (6a, 6b, 6c) qui sont séparés les uns des autres par des fentes s'étendant au moins partiellement à travers la bande d'inviolabilité dans une direction axiale de celle-ci.

3. Dispositif de fermeture selon la revendication 1 ou 2, caractérisé par le fait que la bande d'inviolabilité (6) présente une partie en nervure (7) qui est en saillie radialement vers l'intérieur et qui s'étend vers le haut.

4. Dispositif de fermeture selon la revendication 3, caractérisé par le fait que la partie en nervure (7) présente une surface tronconique qui converge dans une direction allant vers la fermeture (5) lorsque la fermeture et la bande d'inviolabilité (6) sont assemblées.

5. Dispositif de fermeture selon la revendication 1 ou 2, caractérisé par le fait que la bande d'inviolabilité (106) comporte une nervure (107) qui s'étend vers l'intérieur et qui présente un profil en dent de scie en section transversale.

6. Dispositif de fermeture selon les revendications précédentes, caractérisé par le fait que la bande d'inviolabilité (6 ; 106) comporte une partie d'extrémité biseautée (10 ; 110) qui coopère avec une partie d'extrémité biseautée correspondante de ladite jupe de fermeture pour aider à l'insertion de ladite bande d'inviolabilité dans ladite rainure annulaire.

7. Procédé pour former une fermeture selon l'une quelconque des revendications 1 à 4, caractérisé par le fait que la fermeture (5) et la bande d'inviolabilité (6) sont formées dans un moule commun (12, 13) dans lequel la partie d'extrémité circonférentielle extérieure biseautée de l'extrémité inférieure de la jupe de fermeture (5) est reliée par des pontets cassables (11) à la partie d'extrémité biseautée de ladite bande d'inviolabilité (6).

8. Procédé pour former une fermeture selon les revendications 1, 2 et 5, caractérisé par le fait que la fermeture (105) et la bande d'inviolabilité (106) sont formées dans un moule commun (140 à 145) dans lequel la circonférence intérieure de l'extrémité inférieure de la jupe de fermeture (105) est reliée par des pontets cassables (146) à la bande d'inviolabilité (106).

9. Procédé pour former un dispositif de fermeture inviolable en matière plastique selon la revendication 7 ou 8, caractérisé par le fait que l'on moule ensemble une fermeture et une bande d'inviolabilité séparée destinée à celle-ci, que l'on donne à ladite bande d'inviolabilité un diamètre qui diffère du diamètre défini par la rainure annulaire entre les parties de jupe, intérieure et extérieure dans le sens radial, de la jupe filetée intérieurement de la fermeture, et que l'on insère par pression une extrémité de la bande d'inviolabilité dans ladite rainure annulaire de la fermeture.

10. Procédé selon la revendication 9, caractérisé par le fait que la bande d'inviolabilité et ladite fermeture sont moulées sur un noyau de moule commun, et dans lequel l'insertion de la bande d'inviolabilité dans ladite rainure annulaire est réalisée pendant que ladite bande d'inviolabilité et ladite fermeture sont retirées dudit noyau de moule commun.

11. Appareil pour mouler une fermeture inviolable en matière plastique selon le procédé des revendications 7 à 10, caractérisé par le fait qu'il comprend un noyau de moule commun (141) qui définit la configuration intérieure de la fermeture filetée intérieurement et de la bande d'inviolabilité destinée à celle-ci ; des moyens (142) pour produire la rainure annulaire entre les parties, intérieure et extérieure dans le sens radial, de la jupe de ladite fermeture ; des moyens pour produire une surface biseautée sur ladite bande d'inviolabilité ; et des moyens (141a) pour ajuster ladite bande d'inviolabilité dans ladite rainure annulaire, après avoir retiré dudit appareil de moulage l'élément qui produit la rainure, et lorsque ladite bande d'inviolabilité et ladite fermeture sont éjectées du noyau de moule commun.

## Ansprüche

1. Kunststoff-Garantieverschlusseinheit bestehend aus einem Behälterverschluss (5,105) und einem ringförmigen Garantieelement (6,106), welches mechanisch mit dem mit Innengewinde versehenen, jedoch nicht integral mit diesem verbundenen Mantel des Verschlusses so im Eingriff steht, dass ein Entfernen des Verschlusses vom Behälter zu einer Trennung des Garantieelementes vom Verschluss führt, als Resultat einer axialen Kraft beim Oeffnen des Verschlusses führt, dadurch gekennzeichnet, dass der Mantel des Verschlusses (5,105) eine Ringnut (15,115) hat, und dass das Garantieband (6,106) elastisch verformbar ist und in seinem nicht zusammengefügten Zustand einen Durchmesser aufweist, der vom Durchmesser der Ringnut verschieden ist, derart, dass das Garantieband unter Krafteinwirkung in der Ringnut des Verschlusses einführbar ist, und zwar so, dass es die Wiederzusammenfügung der getrennten Teile verhütet, wenn einmal der Verschluss vom Behälter entfernt worden ist.

2. Garantieverschlusseinheit nach Anspruch 1, dadurch gekennzeichnet, das Garantieband (6) eine Vielzahl mente (6a,6b,6c), die mindestens teilweise durch in axialer Richtung verlaufenden Schlitze voneinander getrennt sind, aufweist.

3. Garantieverschlusseinheit nach Anspruch 1 oder 2, dadurch gekennzeichnet, dass das Garantieband (6) einen radial einwärts vorstehende und aufwärts gerichtete Borte (7) aufweist.

4. Garantieverschlusseinheit nach Anspruch 3, dadurch gekennzeichnet, dass die Borte (7) eine kegelstumpfförmige Fläche aufweist, die im zusammengefügten Zustand von Verschluss und Garantieband in Richtung zum Verschluss konvergiert.

5. Garantieverschlusseinheit nach dem Anspruch 1 und 2 dadurch gekennzeichnet, dass das Garantieband (106) eine einwärts gerichtete Borte (107) mit einem im Schnitt sägezahnförmigen Profil hat.

6. Garantieverschlusseinheit gemäss den vorgenannten Ansprüchen, dadurch gekennzeichnet, dass das Garantieband (6,106) einen abgeschrägten Endbereich (10,110) aufweist, welcher mit einem entsprechenden abgeschrägten Endbereich der Verschlussmantelwand zusammenwirkt, um die Einführung des Garantiebandes in die Ringnut zu erleichtern.

7. Verfahren zur Fertigung der Garantieverschlusseinheit nach einem der Ansprüche 1 bis 4, dadurch gekennzeichnet, dass der Verschluss (5) und das Garantieband (6) in einer gemeinsamen Spritzform gebildet sind, in der der abgeschrägte, äussere umlaufende Endbereich des unteren Ende der Verschlussmantelwand (5) über Sollbruchstellen (11) mit dem abgeschrägten Endbereich des Garantiebandes (6) verbunden ist.

8. Verfahren zur Fertigung der Garantieverschlusseinheit gemäss den Ansprüchen 1, 2 und 5, dadurch gekennzeichnet, dass der Verschluss (105) und das Garantieband (106) in einer gemeinsamen Spritzform gebildet sind, in dem der innere Umfang des unteren Endes der Verschlussmantelwand (105) über Sollbruchstellen (146) mit dem Garantieband (106) verbunden ist.

9. Verfahren zur Fertigung einer Kunststoff-Garantieverschlusseinheit gemäss den Ansprüchen 7 oder 8, gekennzeichnet durch das gemeinsame Spritzen eines Verschlusses und eines separaten Garantiebandes, wobei der Durchmesser jenes Garantiebandes unterschiedlich vom Durchmesser, der von der Ringnut gebildeten inneren und äusseren Mantelwandteile des Verschlusses ist, und dass ein Endbereich des Garantiebandes durch Druck in die Ringnut des Verschlusses gefügt wird.

10. Verfahren nach Anspruch 9, dadurch gekennzeichnet, dass das Garantieband und der Verschluss auf einen gemeinsamen Spritzformkern geformt werden, und dass die Einführung des Garantiebandes in die Ringnut beim Abstreifen des Garantiebandes und des Verschlusses vom Spritzformkern erfolgt.

11. Vorrichtung zum Spritzen einer Kunststoff-Garantieverschlusseinheit gemäss dem Verfahren nach den Ansprüchen 7 bis 10, dadurch gekennzeichnet, dass diese einen gemeinsamen Spritzkern (141), der die innere Gestalt des mit Innengewinde versehenen Verschlusses und des Garantiebandes aufweist hat; ferner Mittel (142) zur Bildung der Ringnut zwischen dem radial inneren und dem äusseren Teil der Mantelwand des Verschlusses; Mittel zur Bildung einer bezüglich dem Garantieband verjüngten Fläche; und Mittel (141a) zur Einführung des Garantiebandes in die Ringnut nach der Entfernung des Mittels zur Bildung der Nut von der Spritzvorrichtung, wenn das Garantieband und der Verschluss vom gemeinsamen Spritzkern ausgestossen werden.

FIG. 1

FIG. 2

FIG. 5B

FIG. 5A

FIG. 3

FIG. 4

FIG. 6A

FIG. 6B

FIG. 6C

FIG. 7

FIG. 8

FIG. 9

FIG. 10

FIG. 11

FIG. 12